(19) Europäisches Patentamt
European Patent Office
Office européen des brevets

(11) **EP 4 071 641 A1**

(12) **EUROPEAN PATENT APPLICATION**
published in accordance with Art. 153(4) EPC

(43) Date of publication:
**12.10.2022 Bulletin 2022/41**

(21) Application number: **19955354.6**

(22) Date of filing: **04.12.2019**

(51) International Patent Classification (IPC):
**G06F 21/57** (2013.01)   **G06N 20/00** (2019.01)

(52) Cooperative Patent Classification (CPC):
**G06F 21/57; G06N 20/00**

(86) International application number:
**PCT/JP2019/047358**

(87) International publication number:
**WO 2021/111540 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **SHIMIZU, Toshiya**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **EVALUATION METHOD, EVALUATION PROGRAM, AND INFORMATION PROCESSING DEVICE**

(57)    An evaluation method performed by a computer, the evaluation method includes generating a plurality of subsets that contain one or more pieces of training data, based on a set of a plurality of pieces of training data that includes pairs of input data and labels for machine learning, generating a trained model configured to estimate the labels from the input data, for each of the subsets, by performing the machine learning that uses the training data contained in the subsets, and performing evaluation related to aggression to the machine learning in the training data contained in the subsets, for each of the subsets, based on estimation accuracy of the trained model generated by using the training data contained in the subsets.

FIG. 1

**Description**

[Technical Field]

The present invention relates to an evaluation method, an evaluation program, and an information processing device.

[Background Art]

The computer systems include a machine learning system that performs machine learning based on the collected information. The machine learning system generates a trained model, for example, for analyzing information, by machine learning. Then, the machine learning system is capable of providing services such as information analysis, using the generated trained model.

Note that an attack by a malicious third party is sometimes launched against the machine learning system. One of the attacks against the machine learning is an attack called poisoning. Poisoning is an attack that intentionally alters the trained model by mixing unusual data (contamination data) into the training data.

As a technique to counter poisoning attacks, for example, an information identification method capable of detecting maliciously created false pass data with high accuracy in the process of examining or assessing application documents by supervised machine learning has been proposed. In this information identification method, in response to the fact that the value of statistical data calculated using learning data including the time and test data including the time has exceeded a predetermined threshold value, the likelihood of an attack by invalid data is warned. This method is allowed to be applied only when the learning data includes the time and has low versatility.

As a technique capable of countering poisoning attacks on data that does not include the time, an approach of detecting the contamination data using the distribution of normal data when the normal data is explicitly known has also been proposed. In this approach, for example, in the distribution of data at a predetermined index, data that is away from the center point of the normal data by a fixed distance or more is regarded as contamination data and detected.

[Citation List]

[Patent Literature]

[PTL 1] International Publication Pamphlet No. WO 2013/014987.

[Non-Patent Literature]

[NPL 1] Non-Patent Document 1: Jacob Steinhardt, Pang Wei W. Koh, Percy S. Liang, "Certified Defenses for Data Poisoning Attacks", Advances in Neural Information Processing Systems 30 (NIPS 2017), December 2017.

[Summary of Invention]

[Technical Problem]

However, the technique of detecting the contamination data using the distribution of normal data may not be applied to a case where the normal data is unknown and, if the contamination data is mixed in data treated as normal, may not precisely detect the contamination data. Moreover, with this technique, it is difficult to detect such contamination data that is distributed in a range close to the normal data. As described above, it has been difficult in the past to detect the contamination data in some cases, and the accuracy of detecting the contamination data has not been sufficient. For example, even if contamination data intended to attack machine learning is mixed in training data, it is hard to detect the mixed contamination data, and it is difficult to appropriately verify whether or not the training data has aggression against machine learning.

In one aspect, it is an object of the present invention to enable appropriate evaluation of the aggression of training data to machine learning.

[Solution to Problem]

One proposal provides an evaluation method in which a computer executes the following processing.

The computer generates a plurality of subsets containing one or more pieces of training data, based on a set of a plurality of pieces of the training data including pairs of input data and labels for machine learning. Next, the computer generates trained models configured to estimate the labels from the input data, for each of the subsets, by performing the machine learning that uses the training data contained in the subsets. Then, the computer performs evaluation related to aggression to the machine learning in the training data contained in the subsets, for each of the subsets, based on estimation accuracy of the trained models generated by using the training data contained in the subsets.

[Advantageous Effects of Invention]

According to one mode, the aggression of training data to machine learning may be appropriately evaluated.

The above-described object and other objects, features, and advantages of the present invention will become clear from the following description in conjunction with the accompanying drawings, which illustrate favorable embodiments as examples of the present invention.

[Brief Description of Drawings]

FIG. 1 is a diagram illustrating an example of an evaluation method according to a first embodiment;
FIG. 2 is a diagram illustrating an example of a computer system including a machine learning system;
FIG. 3 is a diagram illustrating an example of hardware of the machine learning system;
FIG. 4 is a diagram schematically illustrating machine learning;
FIG. 5 is a diagram explaining an attack by poisoning;
FIG. 6 is a block diagram illustrating functions used for detecting contamination data in the machine learning system;
FIG. 7 is a diagram illustrating an example of data stored in a storage unit;
FIG. 8 is a diagram illustrating an example of a contamination data detection process;
FIG. 9 is a diagram illustrating an example of an accuracy evaluation process;
FIG. 10 is a flowchart illustrating an example of the procedure of the contamination data detection process;
FIG. 11 is a diagram illustrating an example of a contamination data candidate list;
FIG. 12 is a diagram illustrating an example of dividing a training data set using clustering;
FIG. 13 is a diagram illustrating an example of generating trained models for each sub data set after division;
FIG. 14 is a flowchart illustrating an example of the procedure of a contamination data detection process in a third embodiment;
FIG. 15 is a flowchart illustrating an example of the procedure of a training data set division process utilizing clustering;
FIG. 16 is a diagram illustrating a first example of adding contamination candidate points;
FIG. 17 is a diagram illustrating a second example of adding the contamination candidate points;
FIG. 18 is a flowchart illustrating an example of the procedure of a contamination data detection process in a fourth embodiment; and
FIG. 19 is a flowchart illustrating an example of the procedure of a contamination data detection process in a fifth embodiment.

[Description of Embodiments]

Hereinafter, the present embodiments will be described with reference to the drawings. Note that each of the embodiments may be implemented in combination with a plurality of embodiments as long as no contradiction arises.

[First Embodiment]

First, a first embodiment will be described. The first embodiment is an evaluation method that evaluates aggression to machine learning in training data contained in subsets generated from a set of training data used for the machine learning, for each of the subsets. If the aggression can be properly evaluated for each subset, the detection accuracy for training data (contamination data) generated for attacks on machine learning, such as poisoning attacks, may be improved.

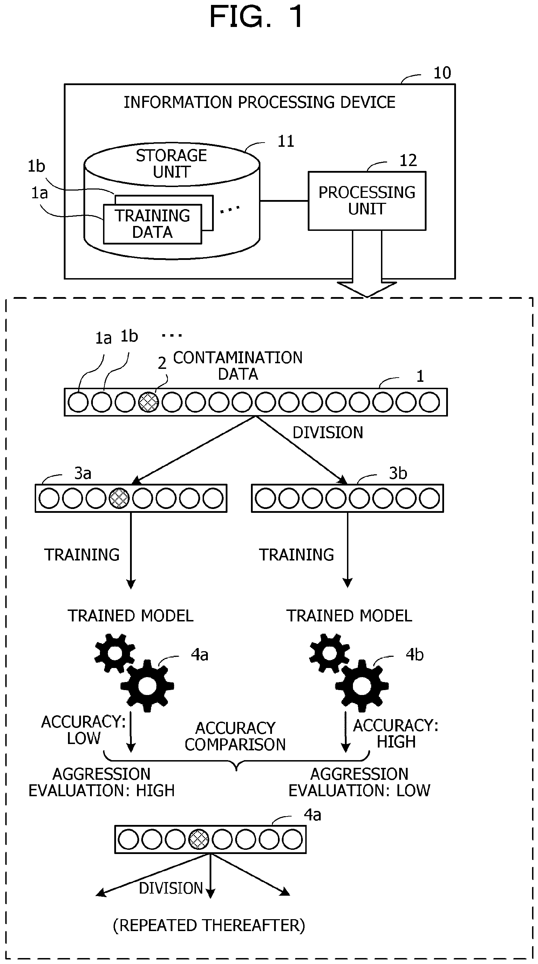

FIG. 1 is a diagram illustrating an example of the evaluation method according to the first embodiment. FIG. 1 illustrates an example of the case where the evaluation method that evaluates aggression of training data to machine learning is implemented using an information processing device 10. The information processing device 10 can implement the evaluation method, for example, by executing an evaluation program in which a predetermined processing procedure is described.

The information processing device 10 includes a storage unit 11 and a processing unit 12. The storage unit 11 is, for example, a memory or a storage device, included in the information processing device 10. The processing unit 12 is, for example, a processor or an arithmetic circuit, included in the information processing device 10.

The storage unit 11 stores a plurality of pieces of training data 1a, 1b, ... used for machine learning. The training data 1a, 1b, ... each includes a pair of input data and a label for machine learning. The label is information (correct answer data) indicating the correct answer when the input data is classified. For example, when the input data is an electronic mail and is to be estimated by machine learning as to whether or not to be a spam mail, the label indicates whether or not the input data is a spam mail.

The processing unit 12 detects training data that is highly likely to have aggression to machine learning, from among the training data 1a, 1b, ... stored in the storage unit 11. For example, the processing unit 12 detects training data generated for poisoning attacks. Specifically, the processing unit 12 performs the following processing.

The processing unit 12 generates a plurality of subsets 3a and 3b containing one or more pieces of training data, based on a set 1 of the training data 1a, 1b, .... Next, the processing unit 12 generates trained models 4a and 4b for estimating the labels from the input data, for each of the subsets 3a and 3b, by performing machine learning using the training data contained in the subsets 3a and 3b. Then, the processing unit 12 performs evaluation related to aggression to the machine learning in the training data contained in the subsets 3a and 3b, for each of the subsets 3a and 3b, based on the estimation accuracy of the trained models 4a and 4b generated using the training data contained in the subsets 3a and 3b. For example, the processing unit 12 evaluates aggression to machine learning in the training data contained in the subsets 3a and 3b higher as the estimation accuracy of a plurality of the trained models 4a and 4b generated based on the subsets 3a and 3b is lower.

For example, when contamination data 2 is mixed in the training data 1a, 1b, ..., the contamination data 2 is contained in one of the generated subsets 3a and 3b. The trained model 4a generated using the training data of the subset 3a containing the contamination data 2 will have a lower label estimation accuracy than the trained model 4b generated using the training data of the subset 3b not containing the contamination data 2. This is because the contamination data 2 is created for the purpose of degrading the accuracy of the trained model.

Based on the accuracy comparison result between the trained models 4a and 4b, the processing unit 12 evaluates aggression to machine learning in the training data used to generate the trained model 4a higher than the training data used to generate the trained model 4b. This makes it possible to precisely estimate that the contamination data 2 is mixed in the subset 3a. For example, the aggression of training data to machine learning is appropriately evaluated.

Note that, when the subset 3a still contains a large amount of training data, it is difficult to specify the contamination data 2 from among those pieces of the training data. In that case, the processing unit 12 repeats the generation of the subsets 3a and 3b, the generation of the trained models 4a and 4b, and the evaluation, for example, based on a set of a predetermined number of pieces of the training data contained in the subset 3a from the one with the highest aggression indicated by the evaluation. By repeatedly executing the series of these processes, the number of pieces of the training data of the subset containing the contamination data is also decreased. When the number of pieces of the training data in the subset containing the contamination data becomes a predetermined number or less, the processing unit 12 ends the repetition of the series of processes. Then, the processing unit 12 outputs, for example, a list of training data contained in the subset having the highest aggression in the final evaluation, as contamination data candidates.

Since the contamination data candidates are narrowed down by the repeated processes, it becomes easy to manually confirm the contents of the contamination data candidates and specify the contamination data 2. In addition, if the number of contamination data candidates is small, the processing unit 12 can also delete the relevant training data from the storage unit 11 and restrain the contamination data 2 from being used for machine learning.

Furthermore, in the generation of the subsets 3a and 3b, the processing unit 12 can also generate the subsets by utilizing clustering in which the training data is classified into one of a plurality of clusters, based on the similarity between the training data 1a, 1b, .... For example, the processing unit 12 clusters the training data 1a, 1b, ... and, for training data classified into a predetermined number of respective clusters from the one with the smallest number of pieces of belonging training data, includes particular pieces of training data belonging to the same cluster into the common subset.

Consequently, when a plurality of pieces of the contamination data 2 is mixed in the training data 1a, 1b, ..., the plurality of pieces of the contamination data 2 may be included in the same subset. For example, a plurality of pieces of the contamination data 2 often has common features and is classified into the same cluster in clustering. In addition, it is conceivable that an attacker will make the amount of the contamination data 2 to be mixed in the training data 1a, 1b, ... be a not too large amount such that the administrator of the machine learning system does not notice that the attack is being made. Therefore, the cluster containing the contamination data 2 has a smaller number of pieces of belonging training data than the other clusters. For example, for training data classified into a predetermined number of respective clusters from the one with the smallest number of pieces of belonging training data, by including particular pieces of training data belonging to the same cluster into the common subset, a plurality of pieces of the contamination data 2 is included into the common subset.

By including a plurality of pieces of the contamination data 2 into the common subset, the difference in accuracy between the subsets 3a and 3b may be restrained from disappearing due to the dispersion of the plurality of pieces of the contamination data 2 across the plurality of subsets 3a and 3b. For example, the accuracy in label estimation of a trained model generated based on a subset containing the plurality of pieces of the contamination data 2 becomes low, and the processing unit 12 may precisely determine that the contamination data 2 is contained in that subset.

Furthermore, the processing unit 12 may repeatedly generate the subsets 3a and 3b, generate the trained models 4a and 4b, and evaluate the trained models 4a and 4b. In this case, each time the evaluation is performed, the processing unit 12 adds a contamination candidate point to a predetermined number of pieces of training data contained in a subset (for example, the subset 3a having the highest aggression) from the one with the highest aggression indicated by the evaluation. Then, the processing unit 12 outputs a predetermined number of pieces of training data from the one with the highest contamination candidate point.

By adding the contamination candidate points to the training data contained in a subset evaluated to have high aggression in this manner, for example, even if a plurality of pieces of the contamination data 2 exists and those pieces of the contamination data 2 are dispersed across a plurality of the subsets 3a and 3b, the detection of the contamination data 2 may be enabled. For example, by repeating the generation of the subsets 3a and 3b, the training, the evaluation, and the addition of the contamination candidate points to training data in a subset evaluated to have high aggression, the contamination candidate points of the contamination data 2 become larger. As a result, the processing unit 12 may detect a predetermined number of pieces of training data from the one with the highest contamination candidate point, as the contamination data 2.

[Second Embodiment]

Next, a second embodiment will be described. The second embodiment is a machine learning system that detects one or more pieces of training data that are likely to include contamination data used in a poisoning attack from the training data set and notifies the administrator.

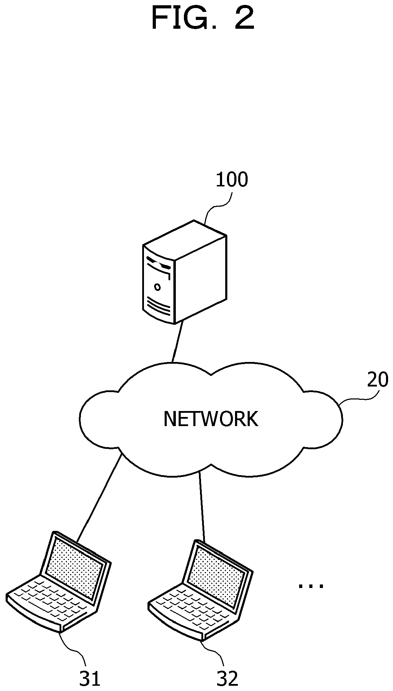

FIG. 2 is a diagram illustrating an example of a computer system including the machine learning system. The machine learning system 100 is connected to a plurality of user terminals 31, 32, ..., for example, via a network 20. The machine learning system 100 analyzes, for example, queries sent from the user terminals 31, 32, ... using a model that has been trained and transmits the analysis results to the user terminals 31, 32, .... The user terminals 31, 32, ... are computers used by users who receive services using a model generated by machine learning.

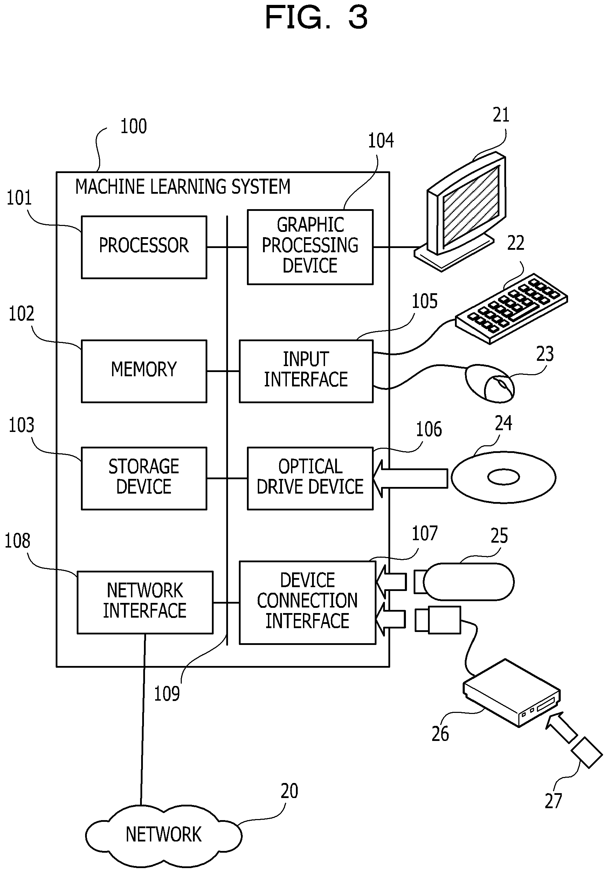

FIG. 3 is a diagram illustrating an example of hardware of the machine learning system. In the machine learning system 100, the whole devices are controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least a part of functions achieved by the processor 101 executing a program may be achieved by an electronic circuit such as an application specific integrated circuit (ASIC) or a programmable logic device (PLD).

The memory 102 is used as a main storage device of the machine learning system 100. The memory 102 temporarily stores at least a part of an operating system (OS) program and an application program to be executed by the processor 101. Furthermore, the memory 102 stores various types of data to be used in processing by the processor 101. As the memory 102, for example, a volatile semiconductor storage device such as a random access memory (RAM) is used.

The peripheral devices coupled to the bus 109 include a storage device 103, a graphic processing device 104, an input interface 105, an optical drive device 106, a device connection interface 107, and a network interface 108.

The storage device 103 writes and reads data electrically or magnetically in and from a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

A monitor 21 is connected to the graphic processing device 104. The graphic processing device 104 displays an image on a screen of the monitor 21 in accordance with an instruction from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, and a track ball.

The optical drive device 106 reads data recorded on an optical disc 24 using laser light or the like. The optical disc 24 is a portable recording medium on which the data is recorded so as to be readable by reflection of light. Examples of the optical disc 24 include a digital versatile disc (DVD), a DVD-RAM, a compact disc read only memory (CD-ROM), and a CD-recordable (R)/rewritable (RW).

The device connection interface 107 is a communication interface for connecting peripheral devices to the machine learning system 100. For example, a memory device 25 and a memory reader/writer 26 may be connected to the device connection interface 107. The memory device 25 is a recording medium equipped with a communication function with the device connection interface 107. The memory reader/writer 26 is a device that writes data in a memory card 27 or reads data from the memory card 27. The memory card 27 is a card-type recording medium.

The network interface 108 is connected to the network 20. The network interface 108 exchanges data with another computer or a communication device via the network 20.

The machine learning system 100 may achieve the processing function of the second embodiment with hardware as described above. Note that the device described in the first embodiment may also be achieved by hardware similar to the hardware of the machine learning system 100 illustrated in FIG. 3.

The machine learning system 100 achieves the processing function of the second embodiment by executing, for example, a program recorded in a computer-readable recording medium. The program in which processing contents to be executed by the machine learning system 100 are described may be recorded on a variety of recording media. For example, the program to be executed by the machine learning system 100 may be stored in the storage device 103. The processor 101 loads at least a part of the program in the storage device 103 into the memory 102 and executes the program. In addition, it is also possible to record the program to be executed by the machine learning system 100 in a portable recording medium such as the optical disc 24, the memory device 25, or the memory card 27. The program stored in the portable recording medium may be executed after being installed in the storage device 103 under the control of the processor 101, for example. Furthermore, the processor 101 may also read the program directly from the portable recording medium to execute the read program.

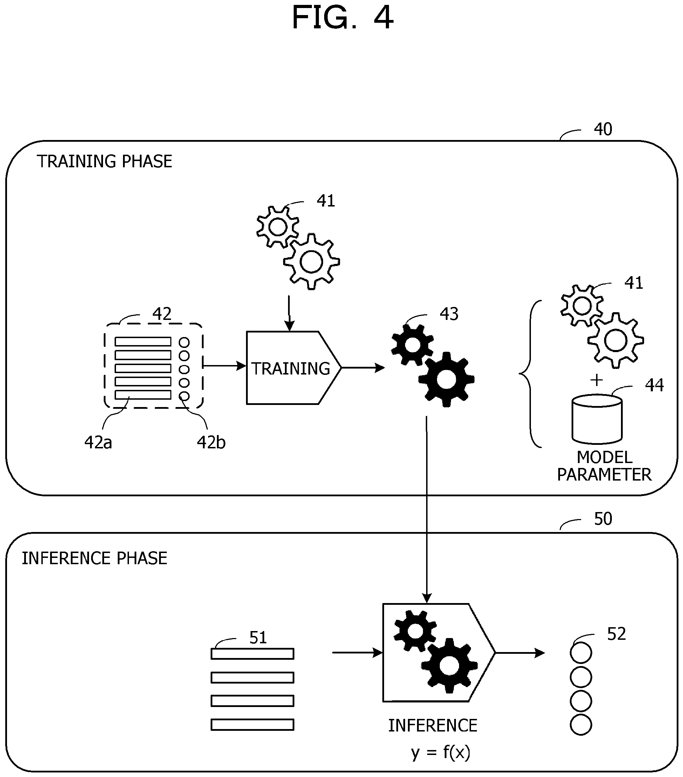

Attacks against such a machine learning system 100 are made by utilizing the characteristics of machine learning. Hereinafter, machine learning will be described with reference to FIG. 4.

FIG. 4 is a diagram schematically illustrating machine learning. As illustrated in FIG. 4, the machine learning performed by the machine learning system 100 is divided into a training phase 40 and an inference phase 50. In the training phase 40, the machine learning system 100 trains an empty model 41 by applying a training data set 42 to the empty model 41. The empty model 41 may be a model in which all or part of parameters trained with certain training data are reflected, as in transfer learning.

The training data set 42 contains, for example, a plurality of pieces of data made up of pairs of input data 42a and labels 42b indicating correct answer output data (teacher data). Both of the input data 42a and the label 42b are expressed by numerical strings. For example, in the case of machine learning using an image, a numerical string representing the features of the relevant image is used as the input data 42a.

The machine learning system 100 applies the input data 42a in the training data set 42 to the empty model 41 to perform analysis and obtains output data. The machine learning system 100 compares the output data with the label 42b and, if there is a discrepancy, modifies the empty model 41. The modification of the empty model 41 means, for example, to modify parameters used for analysis using the empty model 41 (weight parameters and biases of the input data to units in the case of a neural network) such that the output data approaches the correct answer.

The machine learning system 100 is capable of generating a trained model 43 that obtains the same output data as the labels 42b with respect to many pieces of the input data 42a, by training using a large amount of training data set 42. The trained model 43 is represented by, for example, the empty model 41 and model parameters 44 set to appropriate values by training.

The trained model generated in this manner can be deemed as a function in the form of "$y = f(x)$" (each of $x$ and $y$ is structured numerical data such as a vector or a tensor). For example, training in machine learning is the task of defining a function $f$ that fits the pairs of $x$ and $y$ from a large number of pairs of $x$ and $y$.

After generating the trained model 43, the machine learning system 100 implements the inference phase 50 using the generated trained model 43. For example, the machine learning system 100 accepts the input of a query 51 and uses the trained model 43 to obtain output data 52 according to the query 51. For example, when the query 51 is the text of a mail, the machine learning system 100 outputs the estimation result as to whether or not the mail is spam as output data. In addition, when the input data is an image, the machine learning system 100 outputs, for example, the type of an animal imaged in the image as output data.

In attacks against the machine learning system 100, the training phase or the inference phase is targeted for the attacks. In poisoning, the training phase is targeted for the attacks.

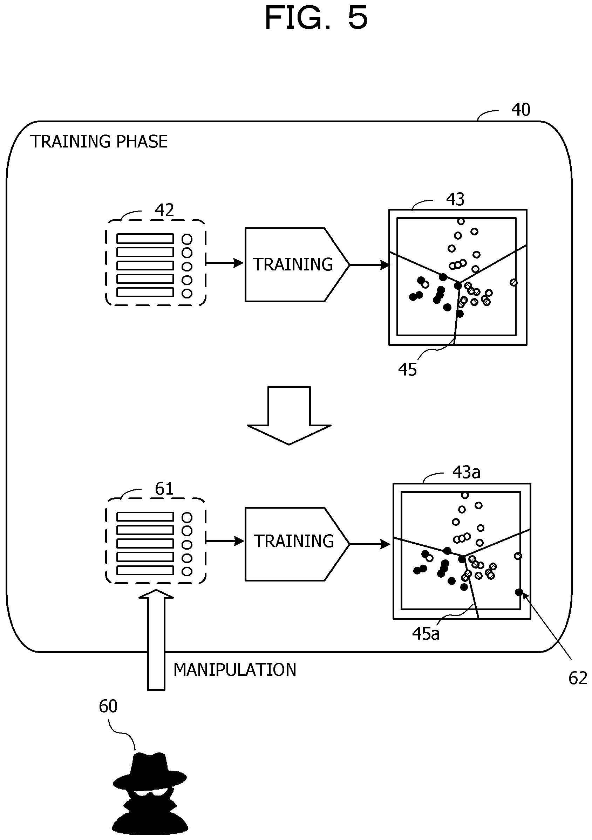

FIG. 5 is a diagram explaining an attack by poisoning. For example, it is assumed that, in the training phase 40, the machine learning system 100 has generated the trained model 43 that classifies data into three groups with a decision boundary 45, using the training data set 42. An attacker 60 uses the user terminal 31 to cause the machine learning system 100 to implement training using a training data set 61 manipulated for poisoning. The training data set 61 manipulated for poisoning contains contamination data 62 that would not be precisely estimated by the right trained model 43. The contamination data 62 is set with wrong labels with respect to the input data. The machine learning system 100 changes the decision boundary 45 according to the contamination data 62.

A changed decision boundary 45a has been changed in a wrong direction to be adapted to the contamination data 62. As a result, when a trained model 43a after being attacked by poisoning is used in the inference phase 50, erroneous output data is output.

The attacker 60 can degrade the estimation accuracy in inference by making an attack against the machine learning system 100 by poisoning. For example, when the machine learning system 100 uses the trained model 43a to filter files input to a server, the input of files with a risk such as a virus is likely to be permitted without being filtered in consequence of the degradation of the estimation accuracy.

For example, a case where the machine learning system 100 generates a trained model for classifying whether or not a spam mail is involved is supposed. In this case, the training data includes mails and labels. The mails include text data and attachment files contained in electronic mails within the company. The labels are teacher data and represent whether the mails are spam or not by binary. For example, the value of the label is "0" when the mail is non-spam, and the value of the label is "1" when the mail is spam.

Note that, when the mails are labeled, whether or not spam is involved is estimated in a rule-based manner, manually, or according to other machine learning results. For example, the machine learning system 100 estimates whether or not a mail is likely or unlikely to be spam by rule-based filtering. The machine learning system 100 displays the mail that is likely to be spam on the monitor and prompts the administrator to estimate whether or not the mail is spam. The administrator confirms the contents of the displayed mail to judge whether or not the relevant mail is spam and inputs the result of judgment to the machine learning system 100. The machine learning system 100 assigns the input label to the mail targeted for estimation and employs the pair of the label and the mail as training data.

As a poisoning attack against such training data, for example, poisoning such as putting a specific word in ordinary mail data is conceivable. Contamination data that has undergone this poisoning will be labeled as usual (assigned with the non-spam label "0") unless that specific word gives an uncomfortable feeling to the person in charge of labeling. Meanwhile, in the machine learning system 100, in the inference phase, there is a possibility that an erroneous inference may be made for a mail containing the specific word mixed in spam mails at the time of inference.

Thus, the machine learning system 100 divides the training data set into a plurality of sub data sets and trains models of machine learning for each sub data set. Note that the sub data set is an example of the subsets 3a and 3b indicated in the first embodiment. Then, the machine learning system 100 compares the inference accuracy of the trained models for each sub data set and estimates that a sub data set from which a trained model with low accuracy has been generated contains the contamination data. In this manner, by detecting the contamination data in consideration of the influence of the contamination data on the accuracy of the trained model, the contamination data that affects the training accuracy may be detected.

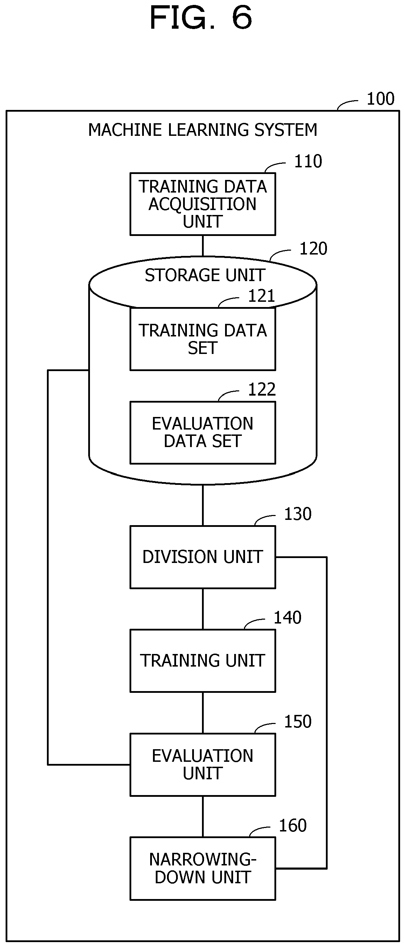

FIG. 6 is a block diagram illustrating functions used for detecting the contamination data in the machine learning system. The machine learning system 100 includes a training data acquisition unit 110, a storage unit 120, a division unit 130, a training unit 140, an evaluation unit 150, and a narrowing-down unit 160.

The training data acquisition unit 110 acquires training data. For example, the training data acquisition unit 110 acquires an electronic mail from a mail server when a model for estimating whether or not the mail is spam is trained. Then, the training data acquisition unit 110 accepts the input of the value of the label indicating whether or not the acquired electronic mail is spam. For example, when the administrator of the machine learning system 100 inputs the value of the label, the training data acquisition unit 110 stores the pair of the electronic mail and the label in the storage unit 120.

The storage unit 120 stores a training data set 121 and an evaluation data set 122. The training data includes input data to be input to the model and a label indicating the correct answer value of the output result. The evaluation data set 122 is a set of evaluation data used to evaluate the trained model. The evaluation data includes input data to be input to the model and a label indicating the correct answer value of the output result. As the storage unit 120, for example, a part of the storage area of the memory 102 or the storage device 103 is used.

The division unit 130 divides the training data set 121 into a plurality of sub data sets. The division unit 130 designates the training data to be contained in each sub data set such that, for example, the ratio of the values of the labels of the training data contained in the training data set 121 and the ratio of the values of the labels of the training data contained in each sub data set after the division are about the same.

The training unit 140 performs machine learning using the training data contained in the sub data set for each of the sub data sets generated by the division. This generates trained models for each sub data set.

The evaluation unit 150 evaluates the accuracy of label estimation by each of the trained models generated for each sub data set, using the evaluation data set 122. For example, the evaluation unit 150 calculates the percentage at which the output data obtained using the trained model by inputting the input data of the evaluation data contained in the evaluation data set 122 to the trained model matches the labels of that evaluation data. The evaluation unit 150 evaluates that a trained model with a higher percentage at which the output data matches the labels has higher accuracy of the label estimation. Note that the evaluation unit 150 may use the sub data set generated by the division, as the evaluation data set 122.

Based on the evaluation result, the narrowing-down unit 160 specifies an evaluation data set of training data that is highly likely to contain the contamination data and displays a list of training data contained in the relevant evaluation data set. For example, the narrowing-down unit 160 specifies an evaluation data set used to generate a trained model with the lowest evaluation result, as a set of training data that is highly likely to contain the contamination data.

Note that, the lines connecting the respective elements illustrated in FIG. 6 indicate a part of communication paths, and a communication path other than the illustrated communication paths may also be set. Furthermore, the function of each element illustrated in FIG. 6 may be achieved, for example, by causing the computer to execute a program module corresponding to the element.

Next, the training data set 121 and the evaluation data set 122 stored in the storage unit 120 will be described in detail.

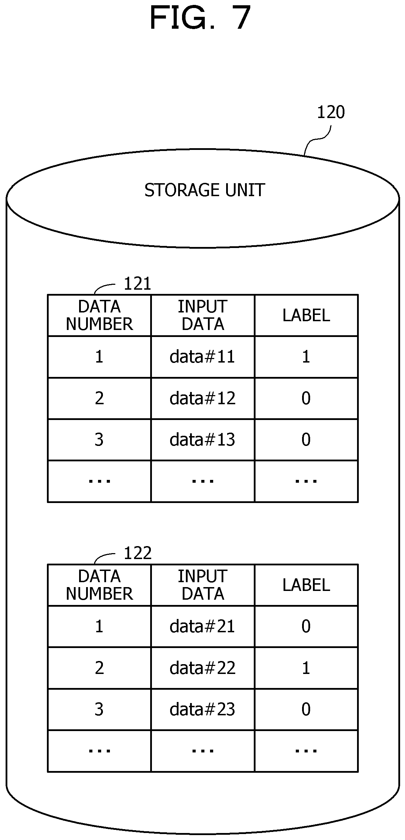

FIG. 7 is a diagram illustrating an example of data stored in the storage unit. The training data set 121 contains records for each piece of the training data. Each piece of the training data has a data number for identifying the training data, input data, and a label. The input data is data targeted for label estimation in machine learning. For example, when machine learning for detecting spam from electronic mails is performed, the contents described in the electronic mails are the input data. The label is teacher data (correct answer data) for the input data. For example, when machine learning for detecting spam from electronic mails is performed, a value indicating whether or not the corresponding electronic mail is spam is set as the label.

The evaluation data set 122 contains records for each piece of the evaluation data. Each piece of the evaluation data has a data number for identifying the evaluation data, input data, and a label, similar to the training data.

If the contamination data is mixed among the training data contained in the training data set 121 illustrated in FIG. 7, exact machine learning becomes difficult. Thus, the machine learning system 100 performs a detection process for the contamination data from the training data contained in the training data set 121.

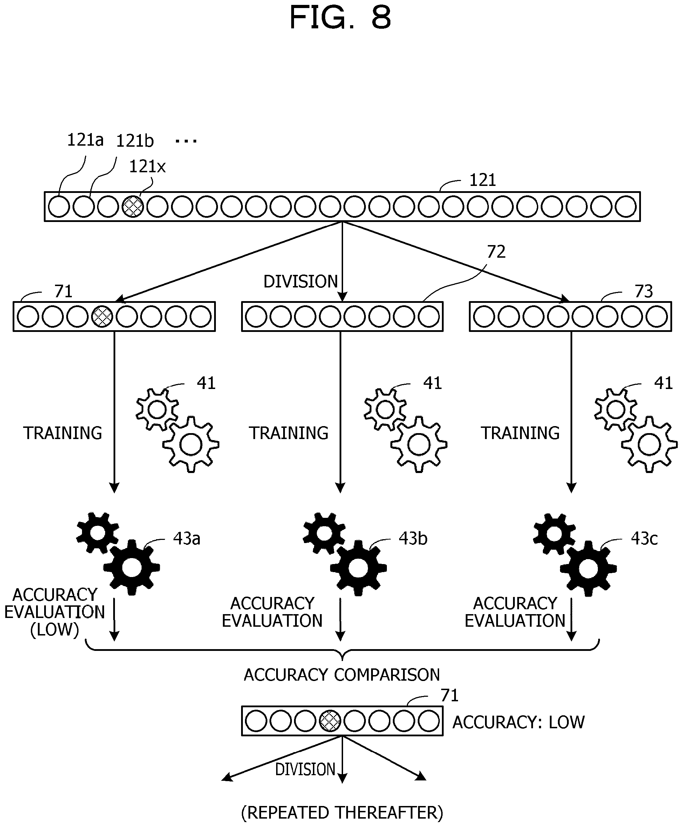

FIG. 8 is a diagram illustrating an example of a contamination data detection process. In FIG. 8, a plurality of pieces of training data 121a, 121b, ... contained in the training data set 121 is indicated by circle marks. The plurality of pieces of training data 121a, 121b, ... includes contamination data 121x generated by the attacker 60.

The machine learning system 100 divides the training data set 121 into sub data sets 71 to 73 containing one or more pieces of the training data. The contamination data 121x is contained in one of the evaluation data sets. In the example in FIG. 8, the sub data set 71 contains the contamination data 121x.

The machine learning system 100 trains the empty model 41 (the training phase in machine learning) for each of the sub data sets 71 to 73, using the training data contained in the relevant set. This generates trained models 43a, 43b, and 43c for each of the sub data sets 71 to 73.

The machine learning system 100 evaluates the accuracy of label estimation by the generated trained models 43a, 43b, and 43c, using the evaluation data set 122.

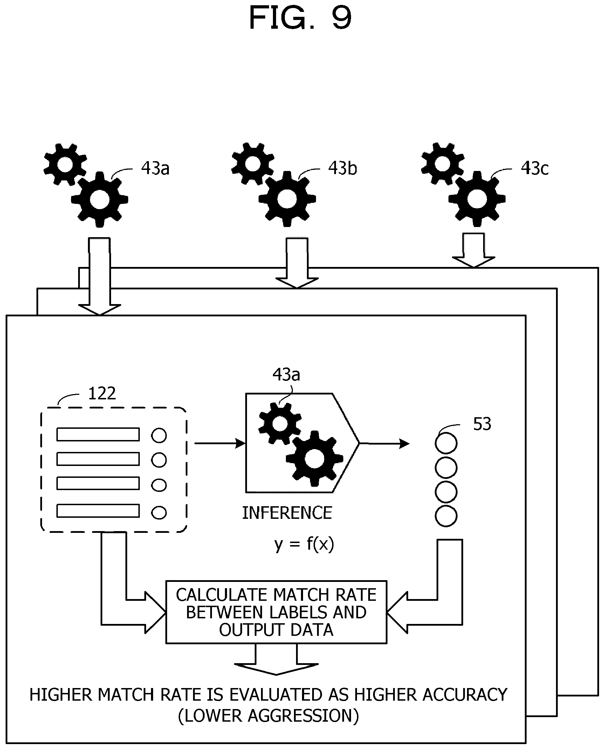

FIG. 9 is a diagram illustrating an example of an accuracy evaluation process. The machine learning system 100 infers the labels of the input data of the evaluation data set 122, for example, using the trained model 43a. The result of the inference is output as output data 53. The machine learning system 100 compares the value of the label contained in the evaluation data as the teacher data with the value of the output data for each piece of the evaluation data in the evaluation data set 122 and determines whether or not the values match. The machine learning system 100 uses, for example, the match rate of the labels of the evaluation data, as the evaluation result for the accuracy of the trained model 43a. The match rate is a value obtained by dividing the number of pieces of the evaluation data in which the labels, which are the teacher data, and the labels indicated in the output data match, by the number of pieces of the evaluation data in the evaluation data set 122. In this case, a higher match rate indicates higher accuracy of the trained model 43a.

The higher the accuracy of the trained model 43a, the lower the aggression of the sub data set 71 used to generate the trained model 43a can be evaluated. In other words, the lower the accuracy of the trained model 43a, the higher the aggression of the sub data set 71 used to generate the trained model 43a. High aggression means that the contamination data 121x is highly likely to be contained.

The machine learning system 100 similarly implements evaluation on the other trained models 43b and 43c using the evaluation data set 122. Hereinafter, the description returns to FIG. 8.

The contamination data 121x contained in the training data set 121 degrades the accuracy of the trained model to be generated. The trained model 43a obtained by training using the sub data set 71 containing the contamination data 121x is in turn inferior in label estimation accuracy to the other trained models 43b and 43c. For example, the evaluation result for the accuracy of the trained model 43a is lowered.

The machine learning system 100 acquires the sub data set 71 used to train the trained model 43a with the lowest evaluation result for the accuracy and performs the division, training, and accuracy evaluation by replacing the training data set 121 with the sub data set 71. Similarly, the machine learning system 100 thereafter repeats the division, training, and accuracy evaluation on the set used to generate the trained model with the lowest evaluation of accuracy.

When a predetermined end condition is satisfied after the accuracy evaluation, the machine learning system 100 determines that the contamination data is included in the training data contained in the set used to generate the trained model with the lowest evaluation in that accuracy evaluation. For example, the machine learning system 100 determines that the end condition is satisfied when the number of pieces of the training data contained in the set used to generate the trained model with the lowest evaluation of accuracy becomes equal to or less than a predetermined number. In addition, the machine learning system 100 may determine that the end condition is satisfied when the number of repetitions of the division, training, and accuracy evaluation reaches a predetermined number of times.

Note that, even if the evaluation data set 122 contains the contamination data, an appropriate evaluation is feasible using the evaluation data set 122 as long as the amount of contamination data is small. For example, even if the evaluation data set 122 contains a small amount of contamination data, the influence of the contained contamination data acts equally on each of the plurality of trained models 43a, 43b, and 43c. Therefore, even if the evaluation data set 122 contains a small amount of contamination data, the trained model with the lowest accuracy may be precisely specified by relatively comparing the evaluation results between the plurality of trained models 43a, 43b, and 43c. Accordingly, normal data that is not contaminated at all does not have to be prepared as the evaluation data set 122.

Next, the procedure of the contamination data detection process will be described in detail.

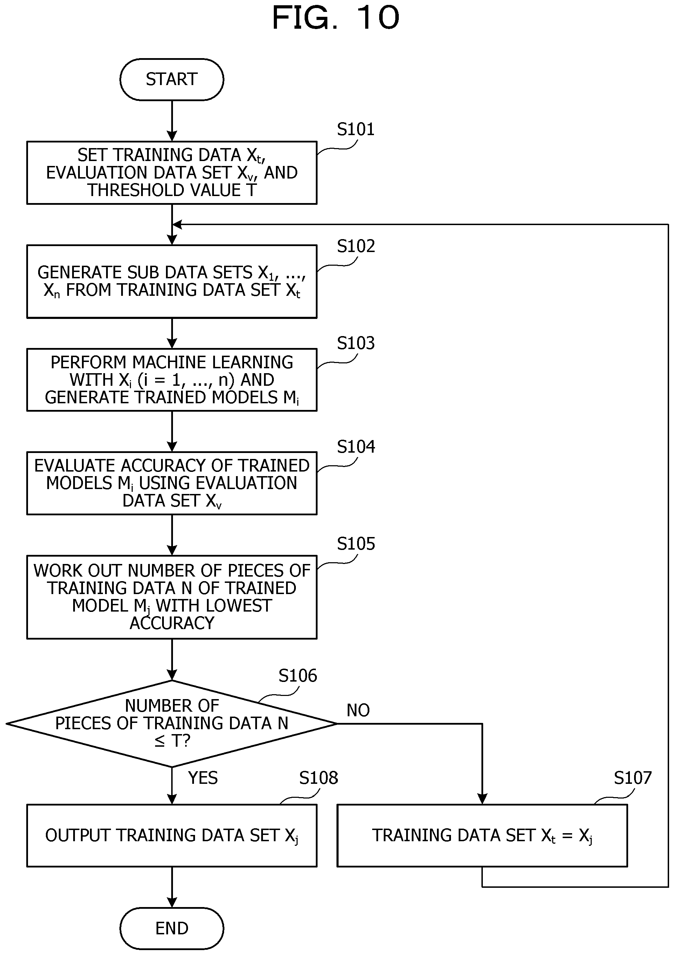

FIG. 10 is a flowchart illustrating an example of the procedure of the contamination data detection process. Hereinafter, the process illustrated in FIG. 10 will be described in accordance with step numbers.

[Step S101] The division unit 130 acquires the training data set 121 and the evaluation data set 122 from the storage unit 120. Then, the division unit 130 sets the training data in the acquired training data set 121 as data set (training data set $X_t$) targeted for training. In addition, the division unit 130 sets the acquired evaluation data set 122 as data set (evaluation data set $X_v$) used for the evaluation of the trained models. Furthermore, the division unit 130 sets a value stipulated in advance as a threshold value T for the number of pieces of data indicating the end condition of the contamination data detection process.

[Step S102] The division unit 130 divides the training data set $X_t$ into a plurality of sub data sets and generates sub data sets $X_1, ..., X_n$. For example, it is assumed that the division unit 130 is given the training data set $X_t = [(x_1, y_1), (x_2, y_2), ..., (x_m, y_m)]$ (m is an integer equal to or greater than one). Here, $x_i$ and $y_i$ (i = 1, ..., m) denote input data and labels, respectively. In this case, the division unit 130 divides the training data set $X_t$ into a plurality of sub data sets, for example, such that $X_t = X_1 \cup X_2 \cup X_3$ holds. When the number of sub data sets to be generated by the division is predefined, the division unit 130 randomly sorts each piece of the training data into one of the plurality of sub data sets. Each of the sub data sets obtained by the division is an individual training data set $X_i$ (i = 1, ..., n) (n is an integer equal to or greater than one).

Note that the division unit 130 ensures that each piece of the training data contained in the training data set $X_t$ is contained in at least one sub data set. In addition, each piece of the training data may be contained in a plurality of sub data sets.

[Step S103] The training unit 140 performs machine learning with each of the training data sets $X_i$ (i = 1, ..., n) and generates n trained models $M_i$.

[Step S104] The evaluation unit 150 evaluates the accuracy of each trained model $M_i$ using the evaluation data set $X_v$.

[Step S105] The narrowing-down unit 160 works out the number of pieces of training data N (N is an integer equal to or greater than one) contained in a training data set $X_j$ (j is an integer equal to or greater than one but equal to or less than n) used to train a trained model $M_j$ with the lowest accuracy.

[Step S106] The narrowing-down unit 160 verifies whether or not the number of pieces of training data N is equal to or less than the threshold value T. If the number of pieces of training data N is equal to or less than the threshold value T, the narrowing-down unit 160 advances the process to step S108. In addition, if the number of pieces of training data N exceeds the threshold value T, the narrowing-down unit 160 advances the process to step S107.

[Step S107] The narrowing-down unit 160 newly sets the training data set $X_j$ as the training data set $X_t$ targeted for training. Then, the narrowing-down unit 160 advances the process to step S102. Thereafter, the processes in steps S102 to S106 are repeated using the updated training data set $X_t$ by the division unit 130, the training unit 140, the evaluation unit 150, and the narrowing-down unit 160.

[Step S108] The narrowing-down unit 160 outputs the training data set $X_j$ as a set of training data that is highly likely to contain the contamination data. For example, the narrowing-down unit 160 displays a list of training data contained in the training data set $X_j$ on the monitor 21 as a contamination data candidate list.

In this manner, training data that is highly likely to be the contamination data may be closely detected. For example, even when the contamination data is located close to the normal training data, that contamination data adversely affects the trained model. Note that the contamination data close to the normal training data is contamination data having high similarity to the normal training data. If the input data of the training data is electronic mails, for example, there is a case where an electronic mail in which such a specific phrase that is not noticed by an ordinary person as the contamination data is intentionally inserted is mixed in the training data set as the contamination data. This contamination data is indistinguishable from a non-spam normal electronic mail, except that the specific phrase is contained, and the label is also set with the value of "0" indicating non-spam.

A trained model trained using such contamination data is less accurate than trained models trained with the normal training data due to the presence of the intentionally inserted specific phrase. For example, when a trained model trained using the contamination data is used to infer whether or not an electronic mail having the specific phrase is spam, the probability of estimating that spam is not involved increases even if that electronic mail is spam. As a result, the estimation accuracy of that trained model becomes lower than the estimation accuracy of other trained models. Therefore, the machine learning system 100 is allowed to verify that the training data set used to train the trained model with low accuracy is highly likely to contain the contamination data. Then, by repeatedly narrowing down the training data set containing the contamination data, the machine learning system 100 may detect the contamination data even if the contamination data is located close to the normal training data.

When narrowing down the training data that is highly likely to contain the contamination data has been finished, the narrowing-down unit 160 displays the contamination data candidate list on the monitor 21. The administrator of the machine learning system 100, for example, investigates the contamination data or removes the contamination data from the training data set 121, based on the contamination data candidate list.

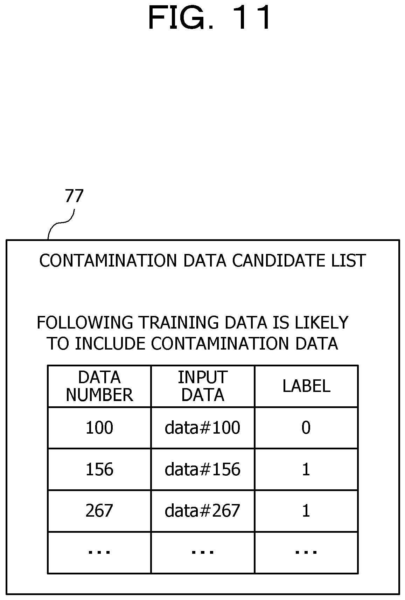

FIG. 11 is a diagram illustrating an example of the contamination data candidate list. A contamination data candidate list 77 displays a list of training data contained in the training data set after being narrowed down by the narrowing-down unit 160. The administrator of the machine learning system 100 refers to the contamination data candidate list 77 to specify training data (contamination data) used for the attack by poisoning. For example, the administrator confirms the contents of the training data included in the contamination data candidate list 77 in detail and specifies the contamination data, depending on the presence or absence of unnatural information, or the like. The administrator, for example, deletes the specified contamination data from the storage unit 120. In addition, the administrator can also delete all the training data included in the contamination data candidate list 77 from the storage unit 120 because all the training data is highly likely to be the contamination data. By deleting training data that has been confirmed to be the contamination data or training data that is highly likely to be the contamination data from the storage unit 120, a highly accurate trained model may be generated using the training data set 121 in the storage unit 120.

In this manner, the contamination data may be easily detected. For example, by causing the machine learning system 100 to detect the contamination data in consideration of the influence of the contamination data on the trained model, the contamination data that is difficult to detect by the conventional poisoning detection may be detected.

[Third Embodiment]

Next, a third embodiment will be described. The third embodiment differs from the second embodiment in that a clustering technique is utilized when the training data set 121 is divided into a plurality of sub data sets. Hereinafter, differences of the third embodiment from the second embodiment will be described.

In the second embodiment, the division unit 130 randomly designates sub data sets containing training data. When there is one piece of the contamination data, random sorting of the training data into the sub data sets will generate one sub data set containing the contamination data and the other sub data sets not containing the contamination data. As a result, the superiority and inferiority in estimation accuracy are produced between the trained models for each sub data set generated using the training data in each sub data set, based on the presence or absence of contamination data. As a result, a sub data set containing the contamination data may be specified.

In contrast to the above, when a plurality of pieces of the contamination data is mixed in the training data set, the contamination data will be evenly allocated to each of the plurality of sub data sets if the training data is randomly allocated to one of a plurality of sub data sets. When each sub data set contains about the same number of pieces of the contamination data, no superiority or inferiority in estimation accuracy is produced between the trained models for each sub data set generated using the training data in each sub data set. In this case, if any one of the sub data sets is designated to be likely to contain the contamination data, the contamination data contained in the other sub data sets may no longer be detected.

Thus, in the third embodiment, a machine learning system 100 clusters the training data contained in the training data set and gathers similar training data into one cluster. Clustering gathers the contamination data into a cluster different from the clusters of data that is not the contamination data. The machine learning system 100 includes training data in a cluster containing the contamination data into the same sub data set, whereby many pieces of the contamination data are gathered into one sub data set.

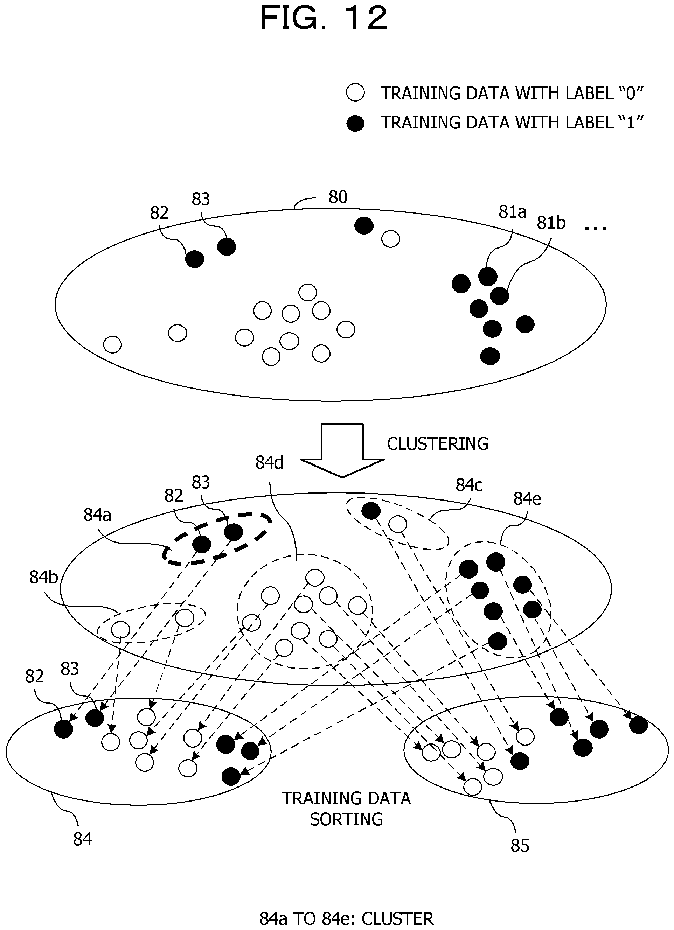

FIG. 12 is a diagram illustrating an example of dividing the training data set using clustering. In FIG. 12, a plurality of pieces of training data 81a, 81b, ... contained in a training data set 80 is depicted by values of labels. Training data with a label of "0" is represented by white circles, and training data with a label of "1" is represented by black circles. Contamination data 82 and 83 is mixed in the plurality of pieces of the training data 81a, 81b, ....

The machine learning system 100 classifies such training data in the training data set 80 into a plurality of clusters 84a to 84e by clustering. In this case, the contamination data 82 and 83 is classified into the same cluster 84a. After that, the machine learning system 100 sorts the training data in each of the plurality of clusters 84a to 84e into one of a plurality of sub data sets 84 and 85.

For example, the machine learning system 100 sorts training data belonging to a cluster having the smallest number of pieces of training data, among the plurality of clusters 84a to 84e, into the same sub data set. In the example in FIG. 12, the number of pieces of training data is two for all of the clusters 84a, 84b, and 84c, which is the smallest number of pieces of training data. Thus, the machine learning system 100 sorts the training data in the cluster 84a into the same sub data set 84. Similarly, the machine learning system 100 sorts the training data in the cluster 84b into the same sub data set 84 and the training data in the cluster 84c into the same sub data set 85.

After that, the machine learning system 100 sorts the training data in the remaining clusters 84d and 84e into any of the sub data sets 84 and 85. At this time, the machine learning system 100 sorts the training data in the clusters 84d and 84e such that the ratio of the labels of the training data in the original training data set 80 and the ratio of the labels of the training data in the sub data set generated after the division are about the same.

In the example in FIG. 12, in the training data set 80, there are 12 pieces of training data with the label "0" and 10 pieces of training data with the label "1". Then, the ratio of the training data with the label "0" to the training data with the label "1" in the training data set 80 is 6 : 5. Thus, the machine learning system 100 sorts the training data in the clusters 84d and 84e into the sub data sets 84 and 85 such that the ratio of the training data with the label "0" to the training data with the label "1" becomes 6 : 5 in each of the sub data sets 84 and 85.

In this manner, the training data set 80 can be divided into the plurality of sub data sets 84 and 85. By dividing using clustering, the contamination data 82 and 83 among the training data is aggregated into one sub data set 84. After generating the sub data sets 84 and 85 by the division process, the machine learning system 100 generates trained models for each of the sub data sets 84 and 85 and evaluates the accuracy, as in the second embodiment.

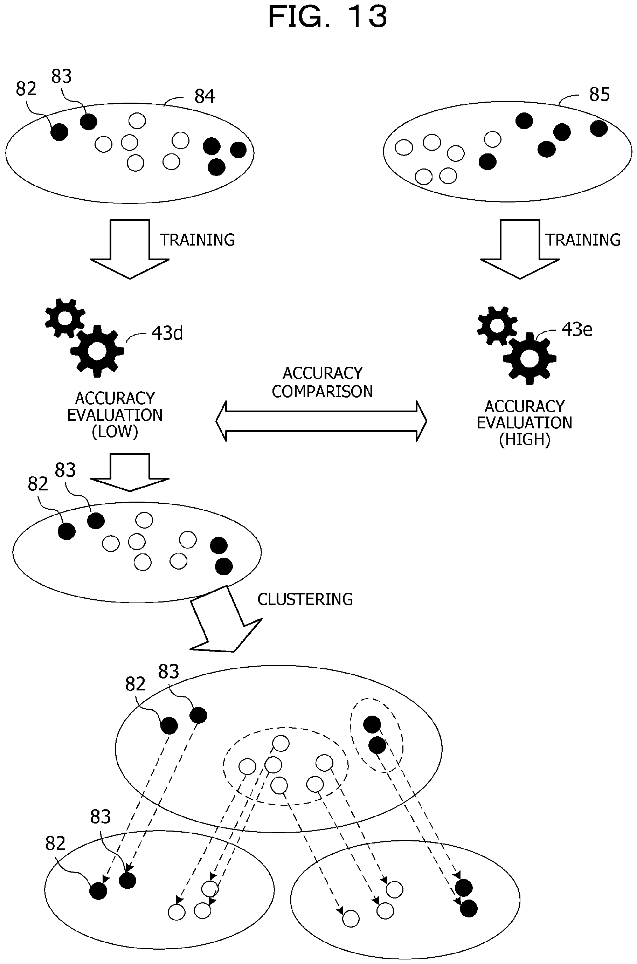

FIG. 13 is a diagram illustrating an example of generating trained models for each sub data set after the division. The machine learning system 100 trains the model based on the training data contained in the sub data set 84 and generates a trained model 43d. Similarly, the machine learning system 100 trains the model based on the training data contained in the sub data set 85 and generates a trained model 43e. Then, the machine learning system 100 evaluates the accuracy of each of the trained models 43d and 43e.

Since the contamination data 82 and 83 is contained only in the sub data set 84, the trained model 43d generated using the training data in the sub data set 84 has lower accuracy of estimation than the trained model 43e generated using the training data in the sub data set 85. For example, it may be precisely verified that the contamination data 82 and 83 is contained in the sub data set 84.

Thus, the machine learning system 100 uses the training data contained in the sub data set 84 as a new training data set and repeats the processes such as the division process for the training data set using clustering. As a result, even when a plurality of pieces of the contamination data 82 and 83 exists, a sub data set containing these pieces of the contamination data 82 and 83 may be output as a contamination data candidate list.

In addition, since the appearance ratio of the labels of the training data is maintained even after the division, the training using the sub data sets 84 and 85 after the division may be performed precisely. Moreover, if the appearance ratio of the labels is the same between the sub data sets 84 and 85 after the division, the variations in the accuracy of the trained models to be generated may be restrained from occurring due to the variations in the appearance ratio of the labels. For example, when the variations in the appearance ratio of the labels affect the accuracy of the trained models, there is the possibility that a sub data set not containing the contamination data may give lower accuracy of the trained model to be generated than a sub data set containing the contamination data. Thus, the machine learning system 100 restrains the variations in the appearance ratio of the labels from affecting the accuracy of the trained models by making the appearance ratio of the labels the same between the sub data sets 84 and 85 after the division.

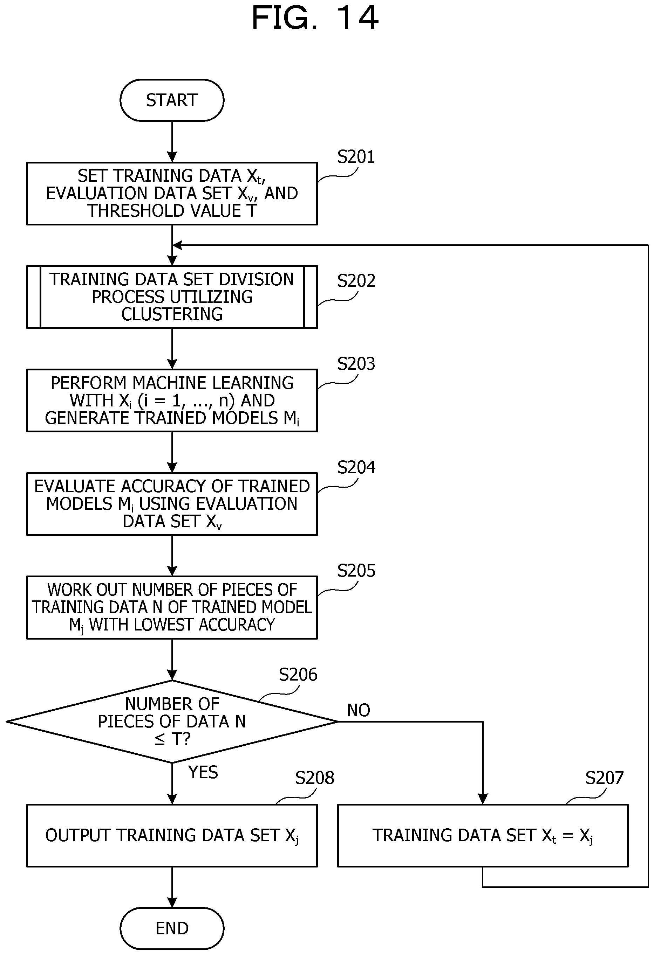

FIG. 14 is a flowchart illustrating an example of the procedure of a contamination data detection process in the third embodiment. Note that the processes in steps S201 and S203 to S208 illustrated in FIG. 14 are similar to the processes in steps S101 and S103 to S108 in the second embodiment illustrated in FIG. 10. Therefore, the only difference from the second embodiment is the process in step S202 below.

[Step S202] A division unit 130 performs a training data set division process utilizing clustering.

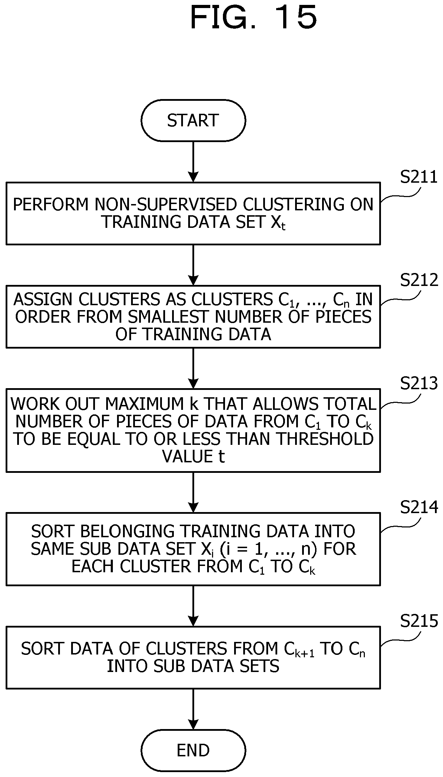

FIG. 15 is a flowchart illustrating an example of the procedure of the training data set division process utilizing clustering. Hereinafter, the process illustrated in FIG. 15 will be described in accordance with step numbers.

[Step S211] The division unit 130 performs non-supervised or semi-supervised clustering on the training data set $X_t$ and generates a plurality of clusters containing training data contained in the training data set $X_t$. Note that, as the clustering algorithm, for example, the division unit 130 may use a k-means method (k-means), a k-dimensional tree (k-d tree), or the like. These clustering algorithms are useful when the number of clusters is predefined and clustering into the defined number of clusters is performed. When the number of clusters to be generated is indefinite, the division unit 130 may use, for example, x-means or density-based spatial clustering of applications with noise (DBSCAN) as a clustering algorithm.

In addition, when the dimension of data is large, the division unit 130 may perform clustering after performing dimension reduction (or feature extraction). Such algorithms include principal component analysis (PCA), latent variable extraction using an autoencoder, Latent Dirichlet Allocation (LDA), and the like.

[Step S212] The division unit 130 assigns the generated clusters as sub data sets $X_1$, ..., $X_n$ in order from the smallest number of pieces of belonging training data. For example, the division unit 130 counts the number of pieces of belonging training data for each of the generated clusters. Next, the division unit 130 arranges the generated clusters in order from the smallest number of pieces of training data. Then, the division unit 130 assigns a set of training data belonging to the i-th cluster as a sub data set $X_i$.

[Step S213] The division unit 130 works out maximum k (k is an integer equal to or greater than one but equal to or less than n) that does not allow the percentage of the sum of pieces of training data from the sub data sets $X_1$ to $X_k$ to the total number of pieces of training data to exceed a preset threshold value t ($0 < t < 1$). For example, the division unit 130 adds the number of pieces of training data to the number of pieces of training data of the sub data set $X_1$ in order from the sub data set with the smallest subscript value. Each time addition is performed, the division unit 130 divides the addition result by the total number of pieces of training data and compares the division result and the threshold value t. When the division result is greater than the threshold value t, the division unit 130 assigns a value obtained by subtracting one from the subscript number of the last added sub data set, as k.

[Step S214] For each cluster from a cluster $C_1$ to a cluster $C_k$, the division unit 130 sorts the training data belonging to the cluster into the same sub data set. For example, the division unit 130 generates a plurality of sub data sets $X_i$ (i = 1, ..., n) and randomly designates sub data sets as the sorting destinations for each cluster from the cluster $C_1$ to the cluster $C_k$. Then, the division unit 130 sorts the training data belonging to each cluster into the sub data sets designated as the sorting destinations of these clusters. For example, when the training data set $X_t$ is divided into two sub data sets $X_1$ and $X_2$, $X_1 = C_1 \cup C_3 \cup C_5...$ and $X_2 = C_2 \cup C_4 \cup C_6...$ hold.

[Step S215] For training data belonging separately to each cluster from a cluster $C_{k+1}$ to a cluster $C_n$, the division unit 130 sorts that training data into sub data sets. At this time, the division unit 130 sorts the training data such that the ratio of the labels of the training data in the training data set $X_t$ and the ratio of the labels of the training data in the sub data set generated after the division are about the same.

In this manner, the training data set may be divided using clustering. The following indicates an example of dividing the training data set.

A case where a training data set $X_t\{(x_i, y_i)\}$ (i = 1, ..., 1000) having 1000 pieces of training data is divided is supposed. It is assumed that the threshold value t = 0.1 is set. For example, 10% "100" of the total number of pieces of training data "1000" is stipulated by the threshold value. In addition, labels "$y_i$" (i = 1, ..., 500) of 500 pieces of training data have "0", and labels "$y_i$" (i = 501, ..., 1000) of the remaining 500 pieces of training data have "1".

As a result of clustering, it is assumed that division into five clusters has been obtained as follows.

$C_1 = \{(x_i, y_i)\}$ (i = 1, ..., 10), the number of pieces of training data "10"

$C_2 = \{(x_i, y_i)\}$ (i = 11, ..., 30), the number of pieces of training data "20"

$C_3 = \{(x_i, y_i)\}$ (i = 31, ..., 500), the number of pieces of training data "470"

$C_4 = \{(x_i, y_i)\}$ (i = 501, ..., 510), the number of pieces of training data "10"

$C_5 = \{(x_i, y_i)\}$ (i = 511, ..., 1000), the number of pieces of training data "490"

Arranging the clusters in order from the smallest number of pieces of training data gives $C_1$, $C_4$, $C_2$, $C_3$, and $C_5$. When the number of pieces of training data belonging to the cluster is added in order from a cluster with the smallest number of pieces of training data, the sum of training data of the clusters $C_1$, $C_4$, and $C_2$ is 40, while the sum of training data of the clusters $C_1$, $C_4$, $C_2$, and $C_3$ is 510. For example, clusters that do not allow the sum of training data to exceed 10% (t = 0.1) of the total are up to $C_1$, $C_4$, and $C_2$.

Thus, for the clusters $C_1$, $C_4$, and $C_2$, the division unit 130 designates the sub data sets as the sorting destinations of the belonging training data in units of clusters. For example, the division unit 130 assigns the sorting destination of the training data sets of $C_1$ and $C_4$ as the sub data set $X_1$ and the sorting destination of the training data of $C_2$ as another sub data set $X_2$.

Furthermore, since the ratio of the labels of the training data set Xt is 1 : 1, the division unit 130 designates the sorting destinations of the training data of the cluster $C_3$ and the cluster $C_5$ such that the ratio of the labels becomes 1 : 1 also in the sub data sets after the division. For example, the division unit 130 divides the cluster $C_3$ into a cluster $C_{31}$ and a cluster $C_{32}$ as follows.

$$C_{31} = \{(x_i, y_i)\} \ (i = 31, ..., 265)$$

$$C_{32} = C_3 - C_{31} = \{(x_i, y_i)\} \ (i = 266, ..., 500)$$

The number of pieces of training data is "235" for both of the clusters $C_{31}$ and $C_{32}$. In addition, the division unit 130 divides the cluster $C_5$ into clusters $C_{51}$ and $C_{52}$ as follows.

$$C_{51} = \{(x_i, y_i)\} \; (i = 511, ..., 745)$$

$$C_{52} = C_5 - C_{51} = \{(x_i, y_i)\} \; (i = 746, ..., 1000)$$

The number of pieces of training data in the cluster $C_{51}$ is "235", and the number of pieces of training data in the cluster $C_{52}$ is "255". Then, the division unit 130 generates the sub data sets $X_1$ and $X_2$ as follows.

$$X_1 = C_1 \cup C_4 \cup C_{31} \cup C_{51}$$

$$X_2 = C_2 \cup C_{32} \cup C_{52}$$

In the sub data set $X_1$, the number of pieces of training data with the label "0" is "245" ($C_1 \cup C_{31}$), and the number of pieces of training data with the label "1" is "245" ($C_4 \cup C_{51}$). Accordingly, the ratio of the labels in the sub data set $X_1$ is 1 : 1. Similarly, the ratio of the labels in the sub data set $X_2$ is also 1 : 1.

In this manner, in the third embodiment, clustering allows a plurality of pieces of the contamination data to be gathered into the same cluster. Then, by sorting the training data in the cluster containing the contamination data into the same sub data set, a plurality of pieces of the contamination data is gathered into one sub data set. As a result, a plurality of pieces of the contamination data may be restrained from being evenly dispersed across a plurality of sub data sets, and even when a plurality of pieces of contamination data exists, these pieces of contamination data may be detected.

[Fourth Embodiment]

Next, a fourth embodiment will be described. In the fourth embodiment, a machine learning system 100 repeatedly divides the training data set with different division patterns. Then, the machine learning system 100 generates trained models by machine learning and evaluates the accuracy each time the division is performed, and adds a contamination candidate point to the training data used to generate a trained model with low accuracy. Since the trained model generated using the contamination data has low accuracy, the contamination candidate points of the contamination data become larger than the others when the division, the generation of the trained models, the evaluation, and the addition of the contamination candidate points are repeated. Thus, the machine learning system 100 outputs training data having a high contamination candidate point as a contamination data candidate.

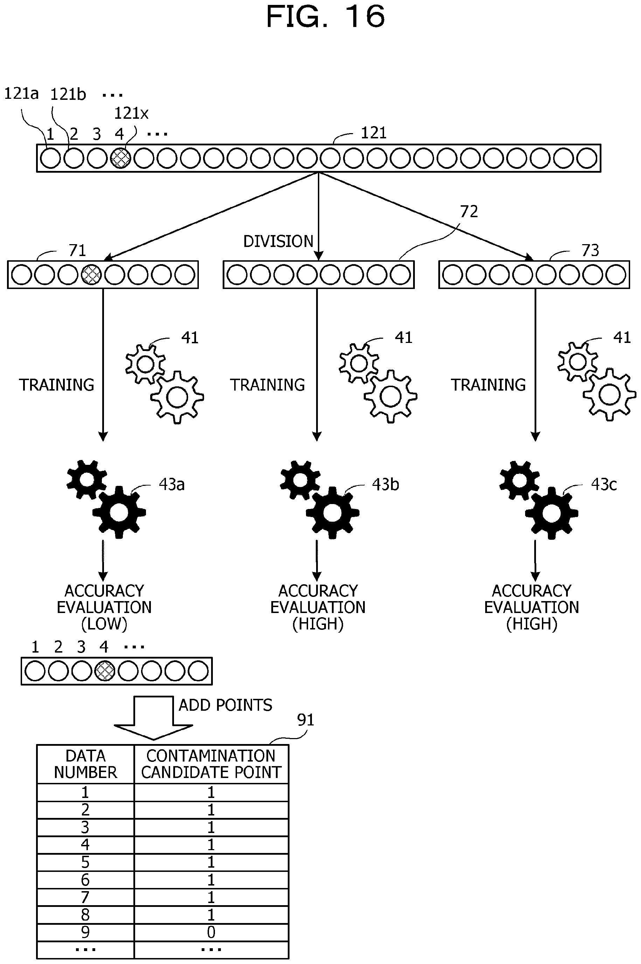

FIG. 16 is a diagram illustrating a first example of adding the contamination candidate points. In the example in FIG. 16, the training data 121a, 121b, ... in the training data set 121 are sequentially assigned with data numbers in ascending order from the left. The machine learning system 100 divides the training data set 121 into a plurality of sub data sets 71 to 73 and generates trained models 43a, 43b, and 43c for each sub data set. Then the machine learning system 100 evaluates the accuracy of each of the trained models 43a, 43b, and 43c.

In the example in FIG. 16, the sub data set 71 contains the contamination data 121x, and the accuracy of the trained model 43a using the sub data set 71 is lower than the accuracy of the other trained models 43b and 43c. Thus, the machine learning system 100 adds one contamination candidate point to each piece of the training data contained in the sub data set 71.

For example, the machine learning system 100 includes a contamination candidate point management table 91. The contamination candidate point management table 91 is a data table for managing contamination candidate points for each piece of training data. In the contamination candidate point management table 91, the contamination candidate points of the training data are set in association with the data numbers of this training data.

In the example in FIG. 16, the sub data set 71 contains training data with data numbers "1" to "8". Accordingly, the machine learning system 100 adds "1" point to each of the data numbers "1" to "8" in the contamination candidate point management table 91.

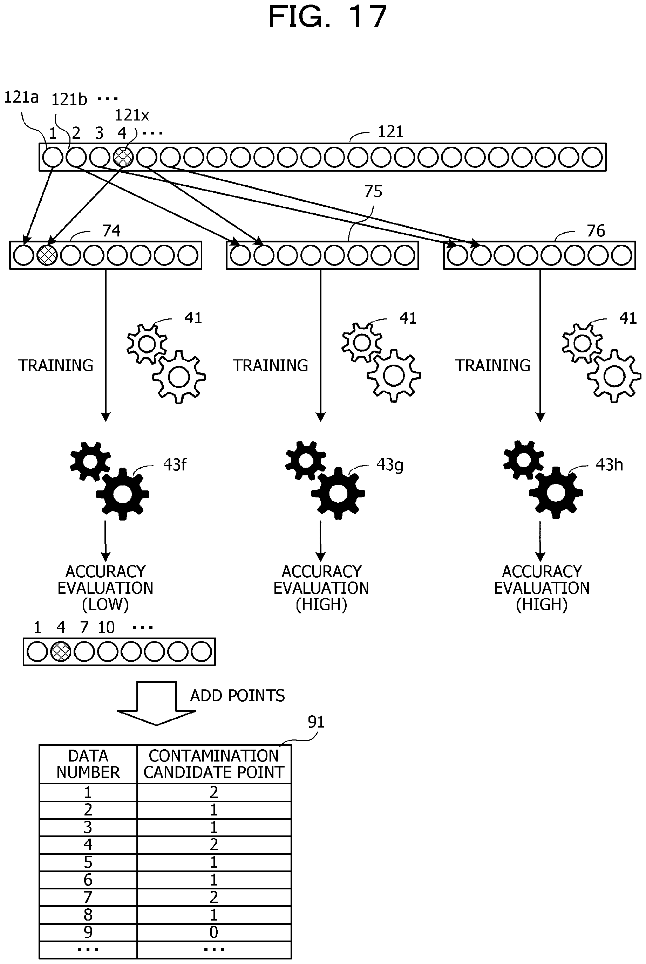

FIG. 17 is a diagram illustrating a second example of adding the contamination candidate points. The machine learning system 100 divides the training data set 121 into a plurality of sub data sets 74 to 76 with another division pattern than the division pattern in FIG. 16 and generates trained models 43f, 43g, and 43h for each sub data set. Then the machine learning system 100 evaluates the accuracy of each of the trained models 43f, 43g, and 43h.

In the example in FIG. 17, the sub data set 74 contains the contamination data 121x, and the accuracy of the trained model 43f using the sub data set 74 is lower than the accuracy of the other trained models 43g and 43h. Thus, the machine learning system 100 adds one contamination candidate point to each piece of the training data contained in the sub data set 74. For example, the machine learning system 100 adds one point to each of the contamination candidate points corresponding to the data numbers of the training data contained in the sub data set 74 in the contamination candidate point management table 91.

By repeating such processing, the contamination candidate point of the contamination data 121x (data number "4") becomes higher than the contamination candidate points of other training data. The machine learning system 100 outputs a predetermined number of pieces of training data from the one with the largest contamination candidate points, as contamination data candidates when the addition of the contamination candidate points is repeated a predetermined number of times.

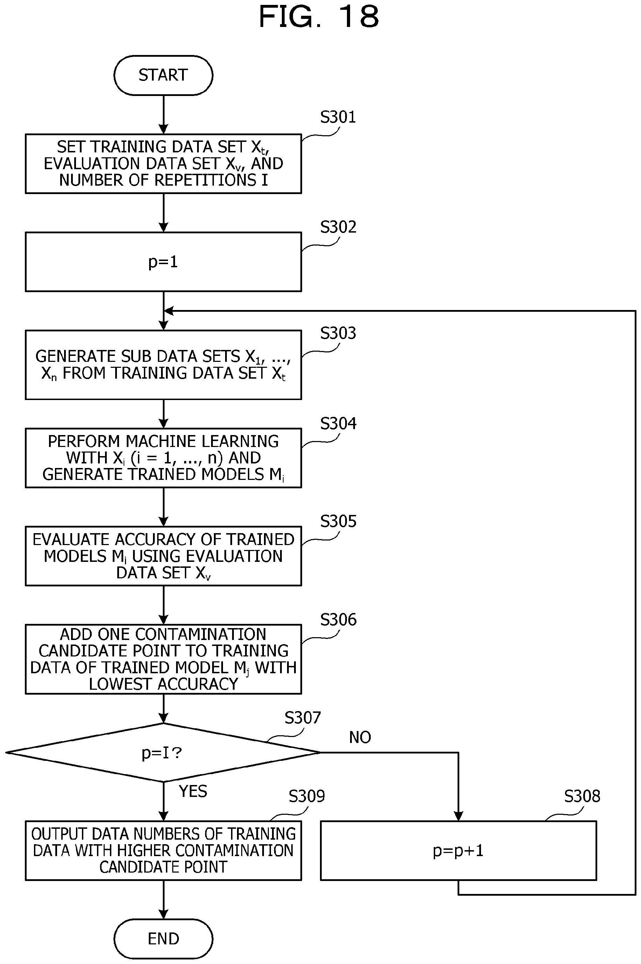

FIG. 18 is a flowchart illustrating an example of the procedure of a contamination data detection process in a fourth embodiment. Hereinafter, the process illustrated in FIG. 18 will be described in accordance with step numbers.

[Step S301] A division unit 130 acquires the training data set 121 and the evaluation data set 122 from the storage unit 120. Then, the division unit 130 sets the training data in the acquired training data set 121 as data set (training data set $X_t$) targeted for training. In addition, the division unit 130 sets the acquired evaluation data set 122 as data set (evaluation data set $X_v$) used for the evaluation of the trained models. Furthermore, the division unit 130 sets a value stipulated in advance as the number of repetitions I (I is an integer equal to or greater than one).

[Step S302] The division unit 130 sets one in a variable p (p = 1) indicating how many times the process has been repeated.

[Step S303] The division unit 130 divides the training data set $X_t$ into a plurality of sub data sets and generates sub data sets $X_1$, ..., $X_n$. At this time, the division unit 130 performs such a division process that generates different sub data sets each time the division is performed. For example, the division unit 130 randomly designates sub data sets as sorting destinations of each of a plurality of pieces of training data.

[Step S304] A training unit 140 performs machine learning with each of the training data sets $x_i$ (i = 1, ..., n) and generates n trained models $M_i$.

[Step S305] An evaluation unit 150 evaluates the accuracy of each trained model $M_i$ using the evaluation data set $X_v$.

[Step S306] A narrowing-down unit 160 adds one contamination candidate point to each piece of training data contained in a training data set $X_j$ (j is an integer equal to or greater than one but equal to or less than n) used to train a trained model $M_j$ with the lowest accuracy.

[Step S307] The narrowing-down unit 160 verifies whether or not the value of the variable p has reached the number of repetitions I (p = I?). If the number of repetitions I has not been reached, the narrowing-down unit 160 advances the process to step S308. In addition, when the number of repetitions I has been reached, the narrowing-down unit 160 advances the process to step S309.

[Step S308] The narrowing-down unit 160 adds one to the variable p (p = p + 1) and advances the process to step S303.

[Step S309] The narrowing-down unit 160 outputs the data numbers of a predetermined number of pieces of training data from the one with the highest contamination candidate point.

As described above, in the fourth embodiment, since the contamination data candidates are detected based on the training candidate points, even when a plurality of pieces of the contamination data is mixed, these pieces of the contamination data may be detected. In addition, even when a plurality of pieces of the contamination data is dispersed across different sub data sets in the first division of the training data set, each piece of the contamination data may be detected, and the accuracy in detecting is improved.

Hereinafter, an example of detecting the contamination data according to the fourth embodiment will be described.

A case where the contamination data mixed in a training data set is to be detected in machine learning that generates a trained model for identifying between handwritten "0" and "1" is supposed. In this case, as normal training data, about 2000 pieces of image data in which "0" or "1" was written by hand were prepared in total. In addition, 100 pieces of the contamination data were prepared. In this case, the contamination data accounts for about 5% of the total. The division unit 130 randomly divides the training data set into two portions. The training unit 140 generates a binary classification model by logistic regression as a trained model. The number of repetitions I of the process is set to "100".

When the machine learning system 100 executed the processing procedure illustrated in FIG. 18 under the above conditions and extracted 100 pieces of the training data with high contamination candidate points as contamination data, the top 100 pieces of the training data estimated to be contamination data include 27 pieces of the contamination data. For example, the contamination data with a mixing rate of 5% may be detected with a detection accuracy of 27%.

[Fifth Embodiment]

Next, a fifth embodiment will be described. The fifth embodiment is a combination of the third embodiment and the fourth embodiment.

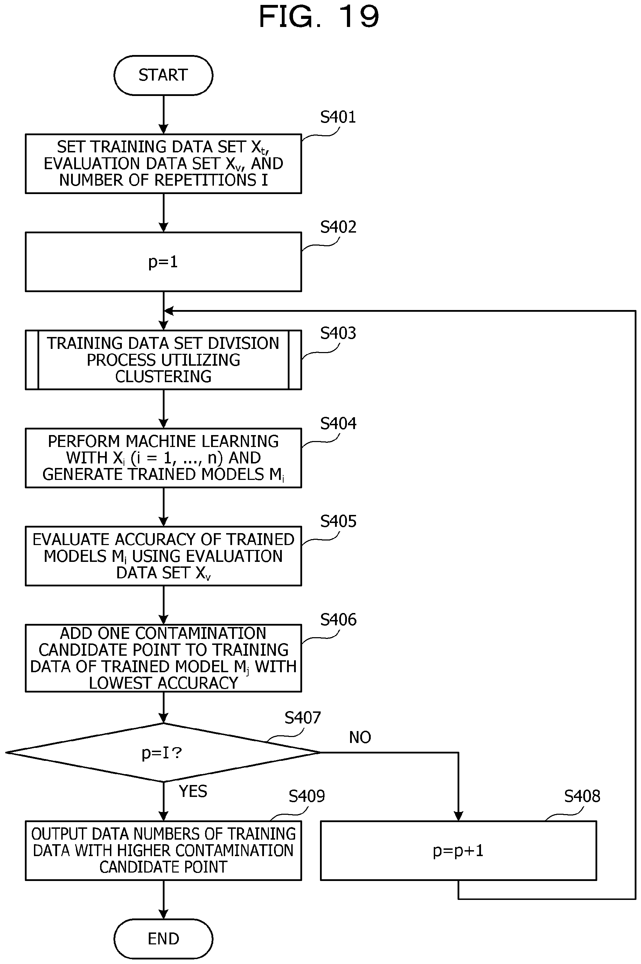

FIG. 19 is a flowchart illustrating an example of the procedure of a contamination data detection process in the fifth embodiment. In the process illustrated in FIG. 19, processes in steps S401, S402, S404 to S409 are similar to the processes in steps S301, S302, S304 to S309 in the fourth embodiment illustrated in FIG. 18, respectively. In addition, the process in step S403 is similar to the process in step S202 in the third embodiment illustrated in FIG. 14.

Note that, in the fifth embodiment, a division unit 130 adopts such a clustering algorithm that generates different clusters for each time of clustering. For example, the division unit 130 changes parameters used in the clustering each time the clustering is performed. For example, the division unit 130 performs feature amount extraction and then clustering based on the similarity in feature amount. At this time, the division unit 130 changes the feature amount to be extracted each time clustering is performed. Consequently, even if the same training data set is repeatedly divided by utilizing clustering, different sub data sets are generated for each division process.

By combining the division process for the training data set utilizing clustering and the extraction of the contamination data by adding the contamination candidate points to the training data in this manner, the extraction accuracy for the contamination data is improved.

For example, in the case of only the division process for the training data set utilizing clustering as in the third embodiment, when a plurality of types of contamination data is mixed, there is the possibility that the contamination data may be dispersed across a plurality of clusters and the contamination data may be dispersed across different sub data sets. Then, some pieces of the contamination data sometimes may not be detected. On the other hand, in the fifth embodiment, the machine learning system 100 repeats the division process utilizing clustering and adds the contamination candidate points to the training data used to generate a trained model with low accuracy every time the division process is performed. Consequently, even if such a plurality of types of contamination data that belongs to different clusters is mixed in clustering, the contamination candidate points of these types of contamination data will be higher than the contamination candidate points of other training data. As a result, omission of detecting the contamination data may be restrained.

Moreover, since the contamination data is gathered into one sub data set by clustering, the difference in accuracy between a trained model generated from the sub data set containing the contamination data and the other trained models stands out at the time of accuracy evaluation. As a result, the sub data set containing the contamination data may be closely verified.

[Other Embodiments]

In the second to fifth embodiments, the machine learning system 100 separates the training data set 121 and the evaluation data set 122, but for example, at least a part of the training data set 121 can also be used as the evaluation data set 122.

The foregoing merely describes the principle of the present invention. Furthermore, numerous modifications and changes are available for those skilled in the art. The present invention is not limited to the exact configuration and application examples illustrated and described above, and all corresponding modifications and equivalents are regarded within the scope of the present invention by appended claims and equivalents thereof.

[Reference Signs List]

1 Set
1a, 1b, ... Training data
2 Contamination data
3a, 3b Subset
4a, 4b Trained model
10 Information processing device
11 Storage unit
12 Processing unit

**EP 4 071 641 A1**

**Claims**

1. An evaluation method performed by a computer, the evaluation method comprising:

   generating a plurality of subsets that contain one or more pieces of training data, based on a set of a plurality of pieces of training data that includes pairs of input data and labels for machine learning;
   generating a trained model configured to estimate the labels from the input data, for each of the subsets, by performing the machine learning that uses the training data contained in the subsets; and
   performing evaluation related to aggression to the machine learning in the training data contained in the subsets, for each of the subsets, based on estimation accuracy of the trained model generated by using the training data contained in the subsets.

2. The evaluation method according to claim 1, wherein
   the evaluation includes evaluating the aggression to the machine learning in the training data contained in the subsets higher as the estimation accuracy of the trained models generated based on the subsets is lower.

3. The evaluation method according to claim 1 or 2, wherein
   the generating the subsets, the generating the trained models, and the evaluation are repeated based on the set of a predetermined number of pieces of the training data contained in the subsets from one with the highest aggression indicated by the evaluation.

4. The evaluation method according to any one of claims 1 to 3, wherein
   the generating the subsets includes: performing clustering in which the training data is classified into one of a plurality of clusters, based on similarity between the training data, and for the training data classified into a predetermined number of the respective clusters from one with the smallest number of pieces of the belonging training data, including particular pieces of the training data that belong to a same cluster into a common one of the subsets.

5. The evaluation method according to any one of claims 1 to 4, wherein

   the generating the subsets, the generating the trained models, and the evaluation are repeated, and
   each time the evaluation is performed, contamination candidate points are added to a predetermined number of pieces of the training data contained in the subsets from one with the highest aggression indicated by the evaluation, and the predetermined number of pieces of the training data from one with the highest contamination candidate points are output.

6. An evaluation program in which a computer executes performs a processing of:

   generating a plurality of subsets that contain one or more pieces of training data, based on a set of a plurality of pieces of training data that includes pairs of input data and labels for machine learning;
   generating a trained model configured to estimate the labels from the input data, for each of the subsets, by performing the machine learning that uses the training data contained in the subsets; and
   performing evaluation related to aggression to the machine learning in the training data contained in the subsets, for each of the subsets, based on estimation accuracy of the trained model generated by using the training data contained in the subsets.

7. An information processing device comprising:
   a processing unit configured to:

   generate a plurality of subsets that contain one or more pieces of training data, based on a set of a plurality of pieces of training data that includes pairs of input data and labels for machine learning,
   generate a trained model configured to estimate the labels from the input data, for each of the subsets, by performing the machine learning that uses the training data contained in the subsets, and
   perform evaluation related to aggression to the machine learning in the training data contained in the subsets, for each of the subsets, based on estimation accuracy of the trained model generated by using the training data contained in the subsets.

# FIG. 1

# FIG. 2

100

20

NETWORK

31

32

...

# FIG. 3

100 MACHINE LEARNING SYSTEM

101 PROCESSOR

104 GRAPHIC PROCESSING DEVICE — 21

102 MEMORY

105 INPUT INTERFACE — 22 — 23

103 STORAGE DEVICE

106 OPTICAL DRIVE DEVICE — 24

108 NETWORK INTERFACE

107 DEVICE CONNECTION INTERFACE — 25 — 26 — 27

109

20 NETWORK

# FIG. 4

# FIG. 5

# FIG. 6

```
┌──────────────────────────────────────────────────────┐  ⌐ 100
│                                                        │
│              MACHINE LEARNING SYSTEM                   │
│                                                        │
│          ┌───────────────────────┐  ⌐ 110             │
│          │    TRAINING DATA       │                    │
│          │    ACQUISITION         │                    │
│          │       UNIT             │                    │
│          └───────────────────────┘  ⌐ 120             │
│          ╭───────────────────────╮                    │
│          │     STORAGE UNIT       │                    │
│          │  ┌──────────────────┐ ⌐ 121                │
│          │  │  TRAINING DATA    │                      │
│          │  │      SET          │                      │
│          │  └──────────────────┘ ⌐ 122                │
│          │  ┌──────────────────┐                       │
│          │  │   EVALUATION      │                      │
│          │  │   DATA SET        │                      │
│          │  └──────────────────┘                       │
│          ╰───────────────────────╯                    │
│          ┌───────────────────────┐  ⌐ 130             │
│          │    DIVISION UNIT       │                    │
│          └───────────────────────┘                    │
│          ┌───────────────────────┐  ⌐ 140             │
│          │    TRAINING UNIT       │                    │
│          └───────────────────────┘                    │
│          ┌───────────────────────┐  ⌐ 150             │
│          │    EVALUATION          │                    │
│          │       UNIT             │                    │
│          └───────────────────────┘                    │
│          ┌───────────────────────┐  ⌐ 160             │
│          │    NARROWING-          │                    │
│          │    DOWN UNIT           │                    │
│          └───────────────────────┘                    │
└──────────────────────────────────────────────────────┘
```

# FIG. 7

120

STORAGE UNIT

121

| DATA NUMBER | INPUT DATA | LABEL |
|---|---|---|
| 1 | data#11 | 1 |
| 2 | data#12 | 0 |
| 3 | data#13 | 0 |
| . . . | . . . | . . . |

122

| DATA NUMBER | INPUT DATA | LABEL |
|---|---|---|
| 1 | data#21 | 0 |
| 2 | data#22 | 1 |
| 3 | data#23 | 0 |
| . . . | . . . | . . . |

# FIG. 8

# FIG. 9

INFERENCE

$$y = f(x)$$

CALCULATE MATCH RATE BETWEEN LABELS AND OUTPUT DATA

HIGHER MATCH RATE IS EVALUATED AS HIGHER ACCURACY (LOWER AGGRESSION)

# FIG. 10

START

SET TRAINING DATA $X_t$, EVALUATION DATA SET $X_v$, AND THRESHOLD VALUE T — S101

GENERATE SUB DATA SETS $X_1$, ..., $X_n$ FROM TRAINING DATA SET $X_t$ — S102

PERFORM MACHINE LEARNING WITH $X_i$ (i = 1, ..., n) AND GENERATE TRAINED MODELS $M_i$ — S103

EVALUATE ACCURACY OF TRAINED MODELS $M_i$ USING EVALUATION DATA SET $X_v$ — S104

WORK OUT NUMBER OF PIECES OF TRAINING DATA N OF TRAINED MODEL $M_j$ WITH LOWEST ACCURACY — S105

NUMBER OF PIECES OF TRAINING DATA N ≤ T? — S106

NO → TRAINING DATA SET $X_t = X_j$ — S107

YES → OUTPUT TRAINING DATA SET $X_j$ — S108

END

# FIG. 11

77

| CONTAMINATION DATA CANDIDATE LIST |
| :-- |

FOLLOWING TRAINING DATA IS LIKELY
TO INCLUDE CONTAMINATION DATA

| DATA NUMBER | INPUT DATA | LABEL |
| :---: | :---: | :---: |
| 100 | data#100 | 0 |
| 156 | data#156 | 1 |
| 267 | data#267 | 1 |
| . . . | . . . | . . . |

# FIG. 12

○ TRAINING DATA WITH LABEL "0"
● TRAINING DATA WITH LABEL "1"

CLUSTERING

TRAINING DATA
SORTING

84a TO 84e: CLUSTER

# FIG. 13

82 83

84

85

TRAINING

TRAINING

43d

43e

ACCURACY
EVALUATION
(LOW)

ACCURACY
COMPARISON

ACCURACY
EVALUATION
(HIGH)

82 83

82 83

CLUSTERING

82 83

83

82

# FIG. 14

START

SET TRAINING DATA $X_t$, EVALUATION DATA SET $X_v$, AND THRESHOLD VALUE T  — S201

TRAINING DATA SET DIVISION PROCESS UTILIZING CLUSTERING  — S202

PERFORM MACHINE LEARNING WITH $X_i$ (i = 1, ..., n) AND GENERATE TRAINED MODELS $M_i$  — S203

EVALUATE ACCURACY OF TRAINED MODELS $M_i$ USING EVALUATION DATA SET $X_v$  — S204

WORK OUT NUMBER OF PIECES OF TRAINING DATA N OF TRAINED MODEL $M_j$ WITH LOWEST ACCURACY  — S205

NUMBER OF PIECES OF DATA N ≤ T?  — S206

NO

YES

OUTPUT TRAINING DATA SET $X_j$  — S208

TRAINING DATA SET $X_t = X_j$  — S207

END

# FIG. 15

START

PERFORM NON-SUPERVISED CLUSTERING ON TRAINING DATA SET $X_t$ — S211

ASSIGN CLUSTERS AS CLUSTERS $C_1, ..., C_n$ IN ORDER FROM SMALLEST NUMBER OF PIECES OF TRAINING DATA — S212

WORK OUT MAXIMUM k THAT ALLOWS TOTAL NUMBER OF PIECES OF DATA FROM $C_1$ TO $C_k$ TO BE EQUAL TO OR LESS THAN THRESHOLD VALUE t — S213

SORT BELONGING TRAINING DATA INTO SAME SUB DATA SET $X_i$ (i = 1, ..., n) FOR EACH CLUSTER FROM $C_1$ TO $C_k$ — S214

SORT DATA OF CLUSTERS FROM $C_{k+1}$ TO $C_n$ INTO SUB DATA SETS — S215

END

# FIG. 16

121a 121b ···
121x
1 2 3 4 ···
121

DIVISION
72

71
73

41
41
41

TRAINING
TRAINING
TRAINING

43a
43b
43c

ACCURACY
EVALUATION
(LOW)

ACCURACY
EVALUATION
(HIGH)

ACCURACY
EVALUATION
(HIGH)

1 2 3 4 ···

ADD POINTS
91

| DATA NUMBER | CONTAMINATION CANDIDATE POINT |
|---|---|
| 1 | 1 |
| 2 | 1 |
| 3 | 1 |
| 4 | 1 |
| 5 | 1 |
| 6 | 1 |
| 7 | 1 |
| 8 | 1 |
| 9 | 0 |
| ··· | ··· |

# FIG. 17

| DATA NUMBER | CONTAMINATION CANDIDATE POINT |
|:---:|:---:|
| 1 | 2 |
| 2 | 1 |
| 3 | 1 |
| 4 | 2 |
| 5 | 1 |
| 6 | 1 |
| 7 | 2 |
| 8 | 1 |
| 9 | 0 |
| ... | ... |

# FIG. 18

START

SET TRAINING DATA SET $X_t$, EVALUATION DATA SET $X_v$, AND NUMBER OF REPETITIONS I — S301

$p=1$ — S302

GENERATE SUB DATA SETS $X_1$, ..., $X_n$ FROM TRAINING DATA SET $X_t$ — S303

PERFORM MACHINE LEARNING WITH $X_i$ (i = 1, ..., n) AND GENERATE TRAINED MODELS $M_i$ — S304

EVALUATE ACCURACY OF TRAINED MODELS $M_i$ USING EVALUATION DATA SET $X_v$ — S305

ADD ONE CONTAMINATION CANDIDATE POINT TO TRAINING DATA OF TRAINED MODEL $M_j$ WITH LOWEST ACCURACY — S306

$p=I$? — S307

NO

$p=p+1$ — S308

YES

OUTPUT DATA NUMBERS OF TRAINING DATA WITH HIGHER CONTAMINATION CANDIDATE POINT — S309

END

# FIG. 19

START

SET TRAINING DATA SET $X_t$, EVALUATION DATA SET $X_v$, AND NUMBER OF REPETITIONS I — S401

$p=1$ — S402

TRAINING DATA SET DIVISION PROCESS UTILIZING CLUSTERING — S403

PERFORM MACHINE LEARNING WITH $X_i$ (i = 1, ..., n) AND GENERATE TRAINED MODELS $M_i$ — S404

EVALUATE ACCURACY OF TRAINED MODELS $M_i$ USING EVALUATION DATA SET $X_v$ — S405

ADD ONE CONTAMINATION CANDIDATE POINT TO TRAINING DATA OF TRAINED MODEL $M_j$ WITH LOWEST ACCURACY — S406

$p=I$? — S407

NO → $p=p+1$ — S408

YES

OUTPUT DATA NUMBERS OF TRAINING DATA WITH HIGHER CONTAMINATION CANDIDATE POINT — S409

END

**INTERNATIONAL SEARCH REPORT**

| International application No. |
| --- |
| PCT/JP2019/047358 |

A. CLASSIFICATION OF SUBJECT MATTER
G06F 21/57(2013.01)i; G06N 20/00(2019.01)i
FI: G06N20/00; G06F21/57

According to International Patent Classification (IPC) or to both national classification and IPC

B. FIELDS SEARCHED

Minimum documentation searched (classification system followed by classification symbols)
G06F21/57; G06N20/00

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | BIGGIO, Battista et al., "Poisoning Attacks against Support Vector Machines", Proceedings of the 29th International Conference on Machine Learning, v3, arXiv.org, 25 March 2013, pp. 1-8, [retrieved on 26 February 2020], Retrieved from the Internet: <URL: https://arxiv.org/pdf/1206.6389.pdf>, section 2-3 | 1-2,6-7<br>3-5 |
| A | 先崎 佑弥 他，深層学習における Adbersarial Training による副作用とその緩和策，コンピュータセキュリティシンポジウム 2017 論文集、16 October 2017, vol. 2017, no. 2, pp. 385-392, ISSN:1882-0840, page 386, footnote (SENZAKI, Yuya et al., "Negative Side Effect of Adversarial Training in Deep Learning and Its Mitigation", Proceedings of Computer Security Symposium 2017) | 1-7 |

☒ Further documents are listed in the continuation of Box C.          ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>26 February 2020 (26.02.2020) | Date of mailing of the international search report<br>10 March 2020 (10.03.2020) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2019/047358

C (Continuation).   DOCUMENTS CONSIDERED TO BE RELEVANT

| Category* | Citation of document, with indication, where appropriate, of the relevant passages | Relevant to claim No. |
|---|---|---|
| A | 吉岡 信和，機械学習応用システムのセキュリティとプライバシ，情報処理 2019 年 1 月号, 15 December 2018, vol. 60, no. 1, pp. 34-39, ISSN:0447-8053, page 38, left column, lines 7-14, (YOSHIOKA, Nobukazu, "Security and Privacy on Machine Learning Based Systems", JPSJ Magazine January 2019 issue) | 1-7 |
| A | JP 2018-155522 A (SHIMADZU CORPORATION) 04.10.2018 (2018-10-04) paragraphs [0041]-[0053], fig. 2, 4 | 1-7 |

Form PCT/ISA/210 (continuation of second sheet) (January 2015)

**INTERNATIONAL SEARCH REPORT**
Information on patent family members

| International application No. |
|---|
| PCT/JP2019/047358 |

| Patent Documents referred in the Report | Publication Date | Patent Family | Publication Date |
|---|---|---|---|
| JP 2018-155522 A | 04 Oct. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013014987 A

**Non-patent literature cited in the description**

- **JACOB STEINHARDT ; PANG WEI W. KOH ; PERCY S. LIANG.** Certified Defenses for Data Poisoning Attacks. *Advances in Neural Information Processing Systems 30 (NIPS 2017),* December 2017